(19)

**Europäisches Patentamt**
**European Patent Office**
**Office européen des brevets**

(11) **EP 4 715 351 A1**

(12) **EUROPEAN PATENT APPLICATION**

(43) Date of publication:
**25.03.2026 Bulletin 2026/13**

(21) Application number: **24200991.8**

(22) Date of filing: **18.09.2024**

(51) International Patent Classification (IPC):
**G01K 1/02** (2021.01)   **G01K 7/16** (2006.01)

(52) Cooperative Patent Classification (CPC):
**G01K 1/026; G01K 7/16;** G01K 2007/163;
G01K 2213/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **Imec VZW**
 **3001 Leuven (BE)**

• **UNIVERSITEIT HASSELT**
 **3500 Hasselt (BE)**

(72) Inventors:
• **OUDEBROUCKX, Gilles**
 **3840 Borgloon (BE)**
• **THOELEN, Ronald**
 **3520 Hasselt (BE)**

(74) Representative: **AWA Sweden AB**
 **Matrosgatan 1**
 **Box 5117**
 **200 71 Malmö (SE)**

(54) **A DEVICE, A SYSTEM, AND A METHOD FOR SENSING THERMAL PROPERTY AND TEMPERATURE OF A TEST SUBJECT**

(57)   A device (100) for sensing thermal property and temperature of a test subject comprises: an array of sensors (110); each comprising an electrically conductive structure (112) and being configured for applying an electrical signal to the electrically conductive structure (112) and sensing a resistance and a temperature-induced change in resistance of the electrically conductive structure (112), indicative of temperature and thermal property of the test subject, respectively, wherein the electrically conductive structure (112) is electrically connected between at least one first contact point (114) and at least one second contact point (118); a common contact (130) configured to provide a common electrical connection to the at least one first contact point (114) of each of the sensors (110); and wherein each of the sensors (110) comprises an individual contact (140) configured to provide an individual electrical connection to the at least one second contact point (118) of the sensor (110).

Fig. 2

EP 4 715 351 A1

## Description

Technical field

The present description relates to sensing thermal property and temperature of a test subject. In a particular application, these properties may be measured for cell samples in a microplate.

Background

Microplates are small, flat plates provided with multiple wells, wherein each well may be used for analysis of a respective sample. Microplates facilitate efficient and parallel processing of multiple samples and are therefore extensively used in for instance research, diagnostics, and drug discovery. In addition to microplates, other cell culture vessels may be used, such as petri dishes.

Microplates may be associated with readers for performing measurements on the samples in the multiple wells. While microplate readers conventionally may measure optical signals from samples for analysis of the samples, another option is to use thermal-based microplate readers, which measure temperature and thermal properties of the sample. A thermal-based microplate reader may facilitate monitoring of the sample in a well over time. The thermal-based microplate reader may provide information on cell count and metabolic activity in a sample simultaneously. Further, thermal-based microplate readers may provide a relatively simple sensor. In addition, as compared to typical optical measurements, the thermal-based microplate reader may not require labelling or staining of the sample.

The microplates provide a compact arrangement of wells, wherein the wells are small and densely arranged. Thus, for measurements to be performed in parallel for the plurality of wells, there is a need for a compact design of a sensor arrangement comprising an array of sensors.

It should be realized that thermal-based measurements may be advantageously performed in other applications for performing measurements in an array of sensors. For instance, the array of sensors may provide a spatial resolution of thermal properties of an object.

Summary

An objective of the present description is to provide a compact manner of sensing of thermal property and temperature using an array of sensors. A particular objective of the present description is to provide sensing by the array of sensors, wherein the sensors may be densely arranged in two perpendicular directions of the array.

These and other objectives are at least partly met by the invention as defined in the independent claims. Preferred embodiments are set out in the dependent claims.

According to a first aspect, there is provided a device for sensing thermal property and temperature of a test subject, said device comprising: an array of sensors; wherein each sensor comprises an electrically conductive structure, wherein the sensor is configured for applying an electrical signal to the electrically conductive structure and sensing a resistance and a temperature-induced change in resistance of the electrically conductive structure, wherein the resistance is indicative of temperature of the test subject and wherein the temperature-induced change in resistance is indicative of thermal property of the test subject, wherein each sensor comprises at least one first contact point and at least one second contact point, wherein the electrically conductive structure is electrically connected between the at least one first contact point and the at least one second contact point, wherein the sensor is configured to apply the electrical signal between the at least one first contact point and the at least one second contact point and sense the resistance and the temperature-induced change in resistance between the at least one first contact point and the at least one second contact point; a common contact, wherein the common contact is configured to provide a common electrical connection to the at least one first contact point of each of the sensors in the array; and wherein each of the sensors comprises an individual contact configured to provide an individual electrical connection to the at least one second contact point of the sensor.

Thanks to use of the common contact, the at least one first contact point of the sensors may be connected to a contact shared by the sensors in the array. This implies that the number of contacts that need to be provided to each individual sensor is limited. The device for sensing thermal property and temperature provides a limited number of contacts to each of the sensors. This ensures that a space required for providing contacts in relation to each of the sensors is limited and hence neighboring sensors may be arranged close to each other as there is not a need for a large space accommodating contacts to the sensors between neighboring sensors.

This is particularly useful for a two-dimensional array of sensors since, in a two-dimensional array, sensors may have neighboring sensors in two directions. Since contacts to be provided to individual sensors require a small space, the sensors may be arranged in close relation to each other in perpendicular directions of the two-dimensional array, e.g., along rows and columns of a regular array.

The sensors comprise a metal or other electrically conductive structure which is arranged in contact with the test subject, such as in direct contact with the test subject. The sensors may use a transient plane source (TPS) method for detecting a thermal property of the test subject.

A current pulse may be applied to the electrically conductive structure, while voltage over the electrically conductive structure is measured. Due to Joule heating, the temperature of the electrically conductive structure will increase and cause a temperature-induced change in electrical resistance, which may be recorded by the voltage measurement. The change in electrical resistance is dependent on the thermal properties of the test subject in contact with the electrically conductive structure such that the voltage measurements may be used for determining thermal properties, such as thermal effusivity.

It should be realized that the sensor may be configured induce the current through the electrically conductive structure by the sensor providing a current signal so as to apply a current to the electrically conductive structure. Thus, the sensor may be configured to sense the temperature-induced change in resistance by sensing a voltage across the electrically conductive structure.

As an alternative, the sensor may be configured to induce the current through the electrically conductive structure by the sensor providing a voltage signal across the electrically conductive structure so as to cause a current through the electrically conductive structure. Thus, the sensor may be configured to sense the temperature-induced change in resistance by sensing the current through the electrically conductive structure.

The temperature-induced change in resistance is typically detected using four contacts with associated wires, wherein two contacts and wires are used for applying a current (or voltage) to the electrically conductive structure and two other contacts and wires are used for detecting the resulting voltage (or current). It may be possible to use the same contacts for applying a current and detecting the resulting voltage such that only two contacts and wires would be used. However, a four-wire measurement provides higher accuracy, since the detected voltage is not affected by any voltage drop in the wires due to the current signal applied through the wires.

Each sensor of the device of the first aspect comprises at least one first contact point and at least one second contact point. The sensor may comprise two first contact points and two second contact points implying that the electrical signal to the electrically conductive structure may be applied using one of the first contact points and one of the second contact points, whereas the resistance may be sensed using the other of the first contact points and the other of the second contact points.

The device of the first aspect uses a common contact that is configured to provide a common electrical connection to the at least one first contact point of each of the sensors. This implies that the sensors are not provided with individual contacts and, hence, the device does not provide a pure four-wire measurement (or two-wire measurement, in case only two contacts are used). Since a common contact is used, the electrical signal is not applied very close to the first contact point of the sensor for which a measurement is to be made. Rather, the electrical signal is applied to a common track extending between the common contact and the first contact point of the sensor for which the measurement is to be made, wherein the common track is shared by multiple sensors and passes the sensors arranged between the common contact and the sensor for which the measurement is to be made. Hence, the measurement by the sensor may be affected by an electrical resistance of the common track.

The common contact may be a contact pad to which a wire may be connected. Similarly, the individual contacts may also be contact pads to which wires may be connected. The common contact and the individual contacts may be arranged in a sensor sheet which further carries the array of sensors. The contact pads further allow wires to be connected to the sensor sheet. Each contact pad may be formed by a small conductive surface area. However, since available space between neighboring sensors is very small, the device allows the sensors to be densely packed in the array by limiting the number of individual contact pads that need to be associated with each sensor and need to be arranged in the available space between neighboring sensors.

The device of the first aspect thus provides a resistance measurement, wherein electrical signals for performing the resistance measurement are provided in relation to a contact that is spaced apart from the sensor. It is an insight of the present description that the common contact may be used with an insignificant effect on the resistance measurements. There is an added electrical resistance based on a track between the common contact and the at least one first contact point of the sensor for which a measurement is made. However, this track may be wide and may at least be much wider than the electrically conductive structure of the sensor. This implies that the resistance of the added track may be low and may therefore provide an insignificant effect on the resistance measurements.

The device may be provided with a configuration of the common contact and the individual contacts such that, even though the device uses a limited number of contacts connected to the sensors, the contacts are arranged to minimize a contribution of the measured electrical resistance. Hence, the electrical resistance measured is defined by the electrically conductive structure of the sensor and not by connections to the electrically conductive structure.

Further, it should be realized that measurements by the sensors may be time multiplexed such that measurements are only performed by a single selected sensor at a time. This implies that an electrical signal is only applied to one individual contact of the sensors in the array at a time. Hence, even though a common contact is used, the electrical signal is applied only to one of the electrically conductive structures of the sensors, such that electrically conductive structures of sensors that are not in use do not affect the measurements performed by the selected sensor.

It should be realized that time multiplexing of measurements may be desired since it implies that only one common source for the electrical signal and one common detector may be needed and these may be shared by all of the sensors in the array. The time multiplexing may also imply that switching elements, such as relays, are needed in order to select for which sensor a resistance measurement is to be performed. A sensor may be selected for the resistance measurement to be performed based on selecting the individual contact to be connected to common source and common detector. This implies that only two switching elements may be needed compared to four switching elements if a pure four-wire measurement would be performed.

The thermal property of the test subject may be any property associated with a material dependent response when heat is supplied to the test subject. The thermal property may for instance be thermal effusivity, thermal conductivity, thermal resistance, or specific heat capacity of the test subject. The thermal property may be represented by or calculated using the temperature-induced change in resistance of the electrically conductive structure detected by the sensor.

The test subject may be any type of subject, which may be in fluid or solid state or in a combination thereof. The test subject may be a solid subject, which may be homogeneously formed by a single material having a homogeneous thermal property or which may comprise a plurality of materials in a test subject with a homogeneous thermal property or a thermal property that may vary from a surface of the test subject into the test subject. A solid subject may be provided in form of a powder.

The fluid may be any type of fluid in gaseous or liquid state. The fluid of interest may form a homogeneous fluid with a homogeneous thermal property. However, the device may be used in relation to an arrangement including further fluid(s).

The array of sensors may be associated with different parts of the test subject. Thus, the array of sensors may provide spatial resolution of thermal property and temperature of the test subject. However, according to an alternative, the test subject may comprise a set of samples, such that each sensor may be configured to sense thermal property and temperature of an individual sample.

The sensors may be regularly arranged in the array. However, it should be realized that the sensors need not necessarily be arranged with uniform spaces between neighboring sensors throughout the array, such that the sensors may be irregularly arranged in the array. The array may be a one-dimensional array. In such case, there may be available space in a lateral direction perpendicular to the extension of the array such that the available space for providing contacts to the sensors is not as limited as for a two-dimensional array. Nevertheless, the possibility to use a limited number of contacts to each individual sensors may still be advantageously used in some applications. However, the array may preferably be a two-dimensional array, wherein the use of the common contact ensures that the sensors may be densely packed in the two dimensions.

The sensor may be any type of sensor that may sense a temperature-induced change in resistance. For instance, the sensor may be a resistive temperature detector (RTD).

The electrically conductive structure may be formed by a metal. However, it should be realized that other conducting or semi-conducting materials may be used. The electrically conductive structure may be exposed on a surface of the device to facilitate heat exchange with the test subject.

It should be realized that the sensor may comprise a protection layer protecting the electrically conductive structure. Thus, the electrically conductive structure need not be in direct contact with the test subject. Rather, a protection layer may be arranged between the electrically conductive structure and the test subject. An effect of a layer, such as a protection layer, being arranged between the electrically conductive structure and the test subject may be taken into account, for instance by ignoring initial data of a temperature response curve.

The sensors of the array may be arranged in a common layer. In addition, the common contact and the individual contacts of each sensor may be provided in the same layer as the sensors. This implies that the device may be provided in form of a sheet which may be easily assembled with other components in an instrument for sensing thermal property and temperature of a test subject. For instance, the device may be assembled with a carrier for holding the test subject, such as a microplate providing wells for holding samples. The device may further be assembled with wires for providing electrical connections to the contacts of the device.

The sensor is configured to sense a temperature of the test subject. In this regard, the sensor may be configured to acquire the measurement based on the electrical signal applied to the electrically conductive structure inducing a current through the electrically conductive structure being below a self-heating current such that the current being induced is smaller than a threshold for causing heating of the electrically conductive structure.

Using a current below the self-heating current may ensure that the measurement of temperature does not induce a change in the temperature of test subject. This ensures that the temperature may be measured accurately.

However, the sensor is further configured to sense a temperature-induced change in resistance. Thus, the sensor may be configured to acquire the measurement based on the electrical signal applied to the electrically conductive structure inducing a current causing heating of the electrically conductive structure. The temperature of the test subject may be determined based on an initial resistance in measurement of the temperature-induced change in resistance.

In addition, the sensor may be configured to measure how resistance changes in response to the electrical signal applied to the electrically conductive structure inducing a current causing heating of the electrically conductive structure. The resistance may be dependent on heat exchange between the electrically conductive structure and the test subject. For instance, a slope of change of the resistance may be indicative of the thermal property of the test subject.

The sensor may thus be configured to perform two separate measurements for sensing the resistance and sensing the temperature-induced change in resistance, respectively, and hence acquire measurements indicative of temperature of the test subject and a thermal property of the test subject, respectively. Alternatively, a single measurement may be performed using a pulse of the electrical signal inducing a current causing heating of the electrically conductive structure, wherein an initial resistance value may be indicative of the temperature of the test subject and a change in resistance during the pulse may be indicative of the thermal property of the test subject.

The electrically conductive structure is electrically connected between at least one first contact point and at least one second contact point of the sensor. Two first contact points may be provided, and two second contact points may be provided, forming two pairs of contact points, wherein each pair comprises one first contact point and one second contact point. The electrical signal may be applied to the electrically conductive structure using one pair of contact points and the resistance and temperature-induced change of resistance may be detected using the other pair of contact points.

The first contact points may be connected to two separate common contacts, each providing common electrical connection to one of the first contact points in the sensors, and the second contact points may be connected to separate individual contacts.

However, the sensors may preferably only comprise a single first contact point, such that there is only a single common electrical connection to a common contact for the sensors in the array.

This implies that a source for applying the electrical signal to the electrically conductive structure may be connected to the common contact and one of the individual contacts and a detector for detecting an electrical signal representing the resistance may be connected to the common contact and another one of the individual contacts.

It should be realized that even if a single common contact is provided and a single individual contact is provided per sensor, four wires may still be associated with each sensor during measurement. Two wires may be connected to each of the contacts such that different wires are provided between the common contact and the source and detector and between the individual contacts and the source and detector.

A measurement by each sensor may be performed using four wires connecting the source and the detector to the contacts of the device. However, the measurement may alternatively be performed using two wires connecting the source and the detector to the contacts of the device. It should be further realized that the measurement may be performed using three wires having a single wire connecting the source and the detector to one side of the electrically conductive structure of the sensor and two wires connecting the source and the detector, respectively, to the other side of the electrically conductive structure.

It should be further realized that there may be further sensors which are not connected to the same common contact. For instance, a large array of sensors may be divided into several sub-groups of arrays of sensors. In such case, each sub-group may be considered to form the array of sensors of the device of the first aspect. The sensors of the sub-group may be connected to a common contact, whereas sensors in other sub-groups may be connected to other common contacts.

In addition, it should be realized that there may be particular sensors which are not connected to the common contact, and that such particular sensors could provide individual contacts separate from the contacts of the sensors of the array. It should be realized that such sensors may be considered not to form part of the array of sensors of the device of the first aspect.

According to an embodiment, each sensor comprises a single first contact point and a single second contact point.

This implies that the number of contacts in the device may be minimized. In particular, a single contact pad may be used for the individual contacts of the sensors.

It should be realized that even if a single first contact point and a single second contact point is provided, the measurements by the sensors may be based on four wires. Each contact point may be connected to two wires for connecting the sensor to the source and the detector, respectively.

According to an embodiment, the device comprises a planar structure, wherein the planar structure is formed by an electrically conductive material and is configured to extend across an area encompassing all of the sensors in the array, wherein the at least one first contact point of each of the sensors is connected to the common contact via the planar structure.

The planar structure may be a simple manner of providing the electrical connection between the first contact points of the sensors and the common contact. Since the planar structure is formed from an electrically conductive material, electrical signals may follow any path within the planar structure. Hence, there is no need for providing particular electrically conductive lines in a structure between the common contact and the sensors.

It should be realized that the electrically conductive structures of the sensors may be provided in a common plane with the planar structure. Thus, the planar structure may comprise holes in which the electrically conductive structures are mounted, such that the electrically conductive structure of each sensor may be isolated from the planar structure except for a connection between the at least one first contact point of the sensor and the planar structure.

It should however be realized that the electrically conductive structures of the sensors may be arranged in a different plane from the planar structure, wherein an insulating layer is provided between a layer in which the electrically conductive structures are arranged and a layer in which the planar structure is arranged. The connections between the first contact points of the sensors and the planar structure may be provided by vias through the insulating layer.

According to an embodiment, the common contact is arranged at a central position in relation to the array of sensors.

Thus, the common contact may be arranged at a center of the array of sensors.

This implies that a longest distance between the common contact and the sensor arranged farthest away from the common contact within the array may be relatively short. This implies that each sensor may be associated with a relatively short track between the at least one first contact point and the common contact, such that the resistance of the track may be low and provide an insignificant effect on the resistance measurements.

However, it should be realized that the common contact may be arranged in different locations. The location of the common contact may be adapted to ensure that the common contact does not interfere with necessary positions of the sensors in the array. For instance, there may not be any available space for the common contact at the center of the array. Thus, the common contact may be arranged in a location outside an area occupied by the array of sensors, while the largest resistance of the track between the common contact and any of the sensors is still acceptable.

The common contact may be arranged in a position so as to provide a low contribution, such as a minimal contribution, of the electrical resistance of the track between the common contact and the sensors, in relation to the overall resistance detected by the sensors.

It should further be realized that the resistance added by the track between the common contact and the sensors may not necessarily be minimized by the common contact being arranged in a central position of the array of sensors. For instance, the sensors may not have identical dimensions in perpendicular directions in the plane. This implies that the shortest track between the common contact and a sensor may not necessarily follow a straight path and may have differing shapes for different sensors. Thus, the common contact may be placed so as to reduce or minimize a largest resistance between the common contact and any of the sensors and such placement of the common contact may not necessarily be (exactly) at a center of the array of sensors.

According to an embodiment, each sensor has a longitudinal shape and wherein the array comprises a plurality of sub-groups, wherein an orientation of the longitudinal shape of the sensors is different for different sub-groups.

The different orientations of the longitudinal shapes may provide a space for the common contact in a central position of the array while allowing the sensors to be equally spaced throughout the array of sensors. This may further be used for providing a wide track within the center of the array providing a low resistance of the track between the common contact and each of the sensors.

According to an embodiment, the device is configured to form part of a microplate comprising a plurality of microwells, such as 24, 48, 96, 192, 384, 768, or 1536 microwells, wherein each microwell is configured to hold a sample, such as a cell sample, forming part of the test subject and wherein each of the sensors in the array is associated with a respective microwell.

Thanks to the limited number of contacts needed by the device, the sensors of the array may be arranged with a sufficiently small distance between the sensors to allow a sensor to be associated with each well in a microplate. Thus, the device may be used with commercially available microplates.

The array of sensors may be configured to perform measurements of cell samples without requiring labelling or staining of the sample, as is typically needed for optical measurements of cell samples. In addition, each of the sensors may be configured to detect both temperature and thermal properties of the cell samples.

According to an embodiment, in case the microwell is configured to hold a cell sample, the device is configured to sense the resistance and the temperature-induced change in resistance for each sensor, wherein the resistance is indicative of temperature of the cell sample representing metabolic activity and wherein the temperature-induced change in resistance is indicative of thermal property of the cell sample representing cell proliferation.

It should be realized that the temperature-induced change in resistance may be indicative of thermal property of the cell sample that may additionally or alternatively represent other cellular processes, such as cell migration, differentiation, and apoptosis.

Thus, the sensors of the device may be used for both measuring metabolic activity and monitoring various cellular processes, such as cell proliferation, providing a measure of cell count. Such measurements may provide valuable information in cell biology and drug discovery. Further, using a thermal-based sensor is advantageous in relation to, for instance, sensors measuring electrical impedance, since the thermal-based sensor allows using a single sensor for measuring both metabolic activity and multiple aspects of cellular activity, such as cell count.

It should be realized that in other embodiments, the device is configured to form part of cell culture vessel. The cell culture vessel need not necessarily be a microplate. Rather, the cell culture vessel may for instance be a petri dish. The sensors in the array may be arranged so as to be sensitive to different parts of the petri dish.

According to another embodiment, the device is configured to sense the resistance and the temperature-induced change in resistance for each sensor, wherein the resistance is indicative of temperature of a liquid sample representing thermal properties of the liquid sample, and wherein the temperature-induced change in resistance is indicative of thermal properties representing mixing ratios of different liquids.

Thus, the ability of the sensor to measure both temperature and thermal property may be used for monitoring a temperature of a liquid sample while also monitoring a mixing of liquids in the liquid sample.

According to another embodiment, the device is configured to sense the resistance and temperature-induced change in resistance for each sensor, providing multi-point measurement for detecting and differentiation of objects.

Thus, the array of sensors may be used for providing a spatial resolution of measurements in relation to a test subject being an object. Thus, different sensors may perform measurements in relation to different parts of the object.

The device may thus be configured to acquire information of temperature and thermal properties of the object over an area. The device may thus be used as a synthetic skin providing a multi-sensory area that may be used in a robot for allowing differentiation of objects based on varying temperature and thermal properties indicated by the resistance measurements. The synthetic skin may thus provide detection and differentiation of objects in a similar manner to how natural skin detects and differentiates objects through touch.

According to a second aspect, there is provided a system for measuring thermal property and temperature of a test subject, the system comprising: the device according to the first aspect; a source configured to provide an electrical signal to be applied to the electrically conductive structure of each sensor; a detector configured to detect a resulting electrical signal between the at least one first contact point and the at least one second contact point for detecting a measurement of the resistance and a measurement of the temperature-induced change in resistance; and a connecting network for connecting the source and the detector, respectively, to the common contact and to each individual contact of the sensors.

Effects and features of the second aspect are largely analogous to those described above in connection with the first aspect. Embodiments mentioned in relation to the first aspect are largely compatible with the second aspect.

The system may thus provide measurement of thermal property and temperature of the test subject using the array of sensors of the device of the first aspect. Thus, the system provides an array of sensors, wherein the sensors may be arranged close to each other.

The system may further comprise a single source for providing the electrical signal and a single detector for detecting a resulting electrical signal representing resistance. Thus, the source and the detector may be shared by the plurality of sensors by the sensors being connected to the source and detector using the connecting network.

The source may be a current source providing the electrical signal as a current signal being applied through the electrically conductive structure of the sensor for which a measurement is to be performed. In such case, the detector may be a voltage detector for detecting a resulting voltage signal caused by the applied current signal.

According to an alternative, the source may be a voltage source providing the electrical signal as a voltage signal being applied across the electrically conductive structure of the sensor for which a measurement is to be performed. In such case, the detector may be a current detector for detecting a resulting current signal caused by the applied voltage signal.

According to an embodiment, the connecting network is configured to provide a plurality of connector units, wherein a single connector unit is associated with each of the common contact and the individual contacts of the sensors, and wherein each connector unit comprises two leads for connecting to the source and the detector, respectively.

A single connector unit may be provided as a cable being connected to a contact pad of the device. Thanks to having two leads in the connector unit, separate connections to the source and the detector may be provided, while only the connector unit is connected to a single contact pad on the device. This may reduce the cabling that needs to be associated with the device for connecting the device to the source and the detector.

Further, thanks to the use of two leads, the source and the detector are separately connected to the common contact and the individual contacts of the sensors, respectively. This implies that the source and the detector do not share electrical connections between the device and the source and detector. Hence, the measurements by the sensors are not affected by resistances in the leads extending from the device to the source and detector.

According to an embodiment, the connecting network comprises a plurality of switching elements for controlling measurement of thermal property and temperature by one sensor at a time.

The switching elements may facilitate sharing of the sensor and the detector by the plurality of sensors in the array. Thanks to the switching components, the measurements of the resistance by the different sensors may be time multiplexed using the switching elements for switching which sensor is connected to the source and the detector.

The switching elements may be provided in any manner for controlling whether a connection between the sensor and the source and detector, respectively, is to open or closed. The switching elements may thus provide connection and disconnection of the sensor to and from the source and detector.

The switching elements may be for instance be implemented as relays, which may include a mechanical component, which may be electronically controlled for physically opening or closing a connection. The switching elements may alternatively be implemented as an electronic component which may be switched between an open and a closed state, or by a multiplexing component for selecting which sensor to be connected to the source and detector.

A sensor may be selected for performing a measurement by controlling the switching elements to connect the selected sensor to the source and the detector. Each sensor need only be associated with a switching element for controlling connection of the individual contact(s) of the sensor to the source and the detector. If the source and the detector are separately connected to the individual contact (e.g., through two different leads), two switching elements may be needed per sensor. However, one switching element per sensor may be sufficient, for instance if the source and the detector are commonly connected to the individual contact.

This implies that the system may comprise relatively few switching elements, e.g., in comparison with a four-wire measurement being provided for each sensor, wherein each sensor may need to be associated with four switching elements.

According to an embodiment, the system further comprises a processing unit, wherein the processing unit is configured to receive data from the detector representing the resistance and the temperature-induced change in resistance detected by the detector, wherein the processing unit is configured to process the data for determining the thermal property and temperature of the test subject.

Hence, the detector may be configured to output data to the processing unit. The processing unit provides capability of analyzing the data for determining the thermal property and the temperature of the test subject.

The processing unit may be particularly adapted for performing desired processing of the data for determining the thermal property and the temperature.

The processing unit may be implemented as a general-purpose processing unit, such as a central processing unit (CPU), which may execute instructions of one or more computer programs in order to implement appropriate functionality. However, the processing unit may alternatively be implemented as firmware arranged, e.g., in an embedded system, or as a specifically designed processing unit, such as an Application-Specific Integrated Circuit (ASIC) or a Field-Programmable Gate Array (FPGA).

The source, the detector, and the processing unit may be arranged in a common housing being provided as a single physical entity. The array of sensors may also be provided within the same housing. Alternatively, the array of sensors may be configured to be connected to the components being provided in the common housing. The array of sensor may be provided in an instrument adapted for making contact with the test subject. Thus, the array of sensors may be arranged in a compact, small-size package or housing, which may facilitate providing the array of sensors for making contact with the test subject in a small space. Further, the housing in which the array of sensors is arranged may provide an interface for connecting the array of sensors to the components in the common housing. This may facilitate setting up the system for performing measurements.

However, it should be realized that the processing unit may be arranged in a different housing to the source and/or the detector. While the source and the detector need to be arranged close to the array of sensors for providing an electrical signal and detecting a resulting electrical signal, the processing unit may be arranged in any remote location. Thus, the processing unit may be arranged in a separate housing and may be configured to communicate with the detector through wired or wireless communication. For instance, the processing unit may be arranged in a separate housing which is configured to be arranged in vicinity to the detector. However, the processing unit need not even be arranged in vicinity to the sensor but may rather be arranged anywhere, such as in a server "in the cloud".

The system may be configured to determine thermal property and temperature in real-time or almost real-time. This may be facilitated by the processing unit being arranged in a common housing with the sensor, although such arrangement is not necessary for real-time processing. Thanks to the use of real-time processing, the system may allow continuous monitoring of thermal property and temperature.

However, it should be realized that the system may alternatively be configured to perform post-measurement analysis. For instance, a sequence of measurements relating to temperature and thermal property may be acquired over a (long) period of time. The processing unit may be configured to analyze the measurements after the entire sequence of measurements have been acquired.

It should be realized that real-time and post-measurement analysis may be used in any application.

According to an embodiment, the system comprises a plurality of devices according to the first aspect.

The source may be configured to provide an electrical signal to be applied to the electrically conductive structure of each sensor of each of the devices. The detector may be configured to detect a resulting electrical signal between the at least one first contact point and the at least one second contact point for detecting a measurement of the resistance and a measurement of the temperature-induced change in resistance. The connecting network may be configured to connect the source and the detector, respectively, to the common contact of each of the devices and to each individual contact of the sensors of each of the devices.

Thus, the system may be configured to provide measurements for a larger number of sensors based on using a plurality of devices. The devices may for instance be arranged side-by-side or in a stacked arrangement. Each device may be arranged in a separate holder for allowing the device to be connected to the source and the detector.

For instance, each device may be configured to form part of a microplate. By having a plurality of devices, the number of sensors may be large without requiring the number of microwells per device to be very large.

According to a third aspect, there is provided a method for measuring thermal property and temperature of a test subject, said method comprising: sequentially measuring thermal property and temperature of the test subject using a plurality of sensors in an array, wherein, for each sensor in the plurality of sensors, measuring of the thermal property and the temperature of the test subject comprises: applying an electrical signal to an electrically conductive structure of the sensor between at least one first contact point and at least one second contact point of the sensor, wherein the electrical signal is applied through a common contact, configured to provide a common electrical connection to the at least one first contact point of each of the sensors in the array and an individual contact configured to provide an individual electrical connection to the at least one second contact point of the sensor; detecting a resulting electrical signal between the at least one first contact point and the at least one second contact point for detecting a measurement of a resistance indicative of temperature of the test subject and detecting a measurement of a temperature-induced change in resistance indicative of thermal property of the test subject.

Effects and features of the third aspect are largely analogous to those described above in connection with the first and second aspects. Embodiments mentioned in relation to the first and second aspects are largely compatible with the third aspect.

The method uses sequential measuring by the sensors such that measurements by the sensors may share a common contact used by the sensor for which a measurement is to be performed in applying an electrical signal and detecting the resulting electrical signal. This implies that the method allows measurements to be made by sensors that are arranged close to each other in the array, since the number of contacts that are needed between neighboring sensors is limited.

According to an embodiment, said sequentially measuring comprises controlling switching elements for connecting a common current source and a common voltage detector to the individual contact of the sensor to be used in measurement.

Thus, the switching elements may be used for controlling an order in which sensors are used for performing measurements. The switching elements may further be used for ensuring that only the sensor for which the measurement is to be performed is connected to the source and the detector during the measurement.

Since the number of individual contacts of the sensors is limited, the number of required switching elements is also limited.

Brief description of the drawings

The above, as well as additional objects, features, and advantages of the present description, will be better understood through the following illustrative and non-limiting detailed description, with reference to the appended drawings. In the drawings like reference numerals will be used for like elements unless stated otherwise.

Fig. 1 is a schematic view of a sensor that may be used in a device according to an embodiment.
Fig. 2 is a schematic view of a device according to an embodiment for sensing thermal property and temperature of a test subject.
Fig. 3 is a schematic view of two sensors of the device of Fig. 2 illustrating connections to the sensors.
Figs 4a-b are schematic views illustrating heat exchange from an electrically conductive structure due to a current applied to the electrically conductive structure, wherein the heat exchange is in dependence of thermal property of a test subject.
Fig. 4c is a graph schematically illustrating a temperature response curve to a current applied to the electrically conductive structure in dependence of thermal property.
Fig. 5 is a schematic view of a system according to an embodiment.
Fig. 6 is a flow chart of a method according to an embodiment.

Detailed description

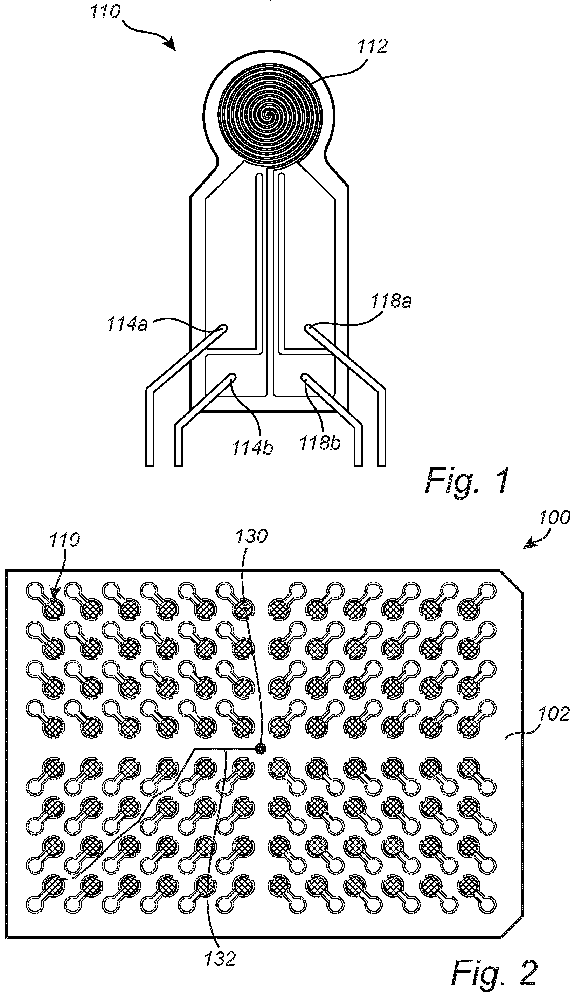

Referring now to Fig. 1, a sensor 110 which may be used for measuring temperature and thermal properties will be described.

The sensor 110 comprises an electrically conductive structure 112. The electrically conductive structure 112 may be arranged in a path such that a length of the path of the electrically conductive structure 112 is relatively long, while the electrically conductive structure 112 is arranged in a small area.

Thus, the electrically conductive structure 112 may form a spiral shape, as shown in Fig. 1. However, it should be realized that the shape of the electrically conductive structure 112 may be varied in numerous ways. The resistance of the electrically conductive structure 112 may be dependent on temperature. Thanks to the long length of the electrically conductive structure 112 being arranged in a small area, the electrically conductive structure 112 is sensitive to an ambient temperature.

In particular, the electrically conductive structure 112 may be arranged in contact with a test subject for measuring the temperature of the test subject. Thus, the temperature of the test subject may cause the temperature of the electrically conductive structure 112 to change such that the resistance is changed. Hence, by measuring the resistance of the electrically conductive structure 112, the temperature of the test subject in contact with the sensor 110 may be determined.

If a relatively high current is induced through the electrically conductive structure 112, the electrically conductive structure 112 may be heated by Joule heating. This implies that heat transfer from the electrically conductive structure 112 to the test subject in contact with the electrically conductive structure 112 may be caused. The heat transfer may depend on the thermal properties of the test subject. The heating of the electrically conductive structure 112 may thus cause a temperature-induced change in resistance of the electrically conductive structure 112, which change depends on the thermal properties of the test subject. Thus, by applying a pulse of an electrical signal, such as a current signal, to the electrically conductive structure 112 and detecting a resulting electrical signal, such as a voltage signal, providing a representation of the resistance of the electrically conductive structure 112, it is possible to deduce information of thermal property of the test subject based on the detected resulting electrical signal.

The electrically conductive structure 112 may be formed by any material which is electrically conductive. Typically, the electrically conductive structure 112 may be formed by a metal. However, it should be realized that the electrically conductive structure 112 may alternatively be formed by another electrically conducting material, or by a semi-conducting material.

The sensor 110 may further comprise first contact points 114a, 114b at one end of the electrically conductive structure 112 and may further comprise second contact points 118a, 118b at another end of the electrically conductive structure 112.

The first contact points 114a, 114b and the second contact points 118a, 118b may comprise a relatively large area of an electrically conductive material for accommodating a contact between the sensor 110 and a source for providing an electrical signal to the sensor 110 and a detector for detecting a resulting electrical signal. This facilitates connecting the sensor to source and detector.

The sensor 110 may comprise two first contact points 114a, 114b and two second contact points 118a, 118b forming two pairs of contact points. Thus, the source and the detector may be associated with a respective pair of contact points. This implies that the electrical signal may be applied to the electrically conductive structure 112 using a first pair of contact points 114a, 118a, and the resulting electrical signal may be detected using a second pair of contact points 114b, 118b. This implies that a resistance in leads between source and detector, respectively, and the sensor 110 will not affect the resistance measurement performed by the sensor 110.

However, it should be realized that a contact point may be shared by the source and the detector while two separate leads may be provided in a cable to be connected to the contact point. Thus, the resistance in leads between source and detector, respectively, and the sensor 110 may still not affect the resistance measurement.

Referring now to Fig. 2, a device 100 for sensing thermal property and temperature of a test subject will be described. The device comprises an array of sensors 110. The sensors 110 in the array may each be configured as described above in relation to Fig. 1.

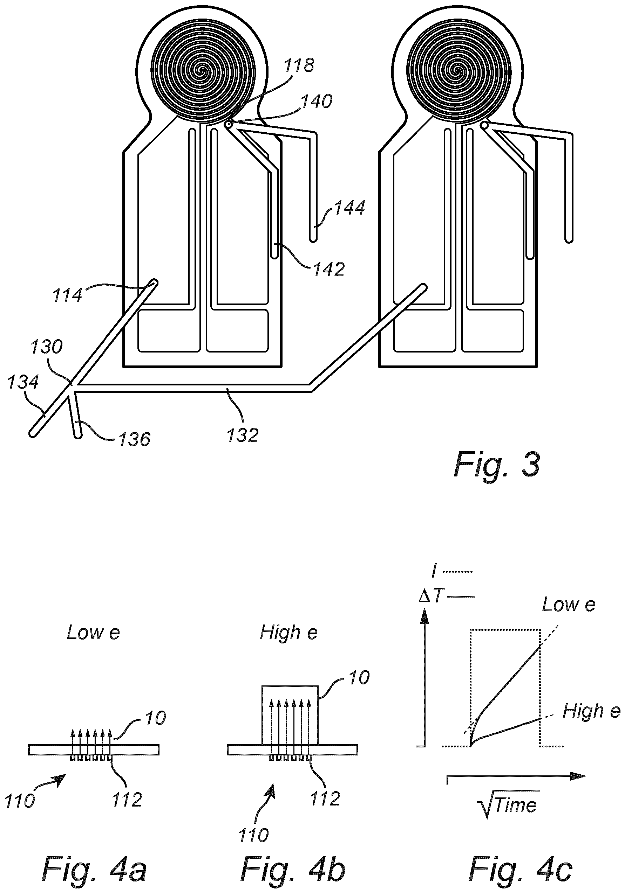

The array of sensors 110 may be provided in a planar structure 102. The planar structure 102 may be formed by an electrically conductive material. The planar structure 102 may for instance be formed by a metal sheet. The planar structure 102 may accommodate assembly of the sensors 110 within the planar structure 102. Thus, the planar structure 102 may comprise openings in the metal sheet, wherein a sensor 110 may be arranged within each opening. Each sensor 110 may be arranged in the opening of the planar structure 102 with a single first contact point 114 connected to the metal sheet, as schematically illustrated in Fig. 3 showing connections provided to two sensors 110.

However, it should be realized that the sensors 110 may alternatively be arranged in a sensor layer that is parallel to the planar structure 102 with a layer of insulating material arranged between the sensor layer and the planar structure 102. In such case, connections between the sensors 110 and the planar structure 102 may be provided by vertical interconnects formed by an electrically conductive material extending through the insulating material between the sensors 110 and the planar structure 102.

The device 100 comprises a plurality of contacts, enabling the electrically conductive material of the planar structure 102 and the sensors 110 to be connected to electrical components external to the planar structure 102. The contacts may be provided in form of contact pads, such as bond pads, for allowing an electrical contact to be formed to the planar structure 102 and the sensors 110.

The device 100 comprises a common contact 130. Thus, the device 100 may comprise a contact pad, which may provide an electrical connection to the electrically conductive material of the planar structure 102. Since each sensor 110 may be arranged with the first contact point 114 connected to the planar structure 102, the first contact points 114 of all of the sensors 110 are connected to the common contact 130 via the electrically conducting material of the planar structure 102. Thus, the common contact 130 is configured to provide a common electrical connection to the first contact point 114 of each of the sensors 110.

Each of the sensors 110 may further comprise a respective individual contact 140. The individual contact 140 is configured to provide an individual electrical connection to a second contact point 118 of the respective sensor 110. Thus, the individual contact 140 is dedicated to a single sensor 110.

Each sensor 110 may have a single individual contact 140 for providing an electrical connection to a single second contact point 118, as schematically illustrated in Fig. 3. The single second contact point 118 may still be associated with two different leads, such that two separate leads connected to the source and the detector, respectively, may be connected to the single second contact point 118.

However, it should be realized that each sensor 110 may alternatively comprise two individual contacts configured to provide individual electrical connection to each of two different second contact points 118a, 118b of the sensor 110.

The planar structure 102 may be configured to extend in an area sufficiently large to encompass all of the sensors 110 in the array. The planar structure 102 may provide relatively wide portions of electrically conductive material between the sensors 110. Thus, the electrical connection between the first contact point 114 of each of the sensors 110 and the common contact 130 may be provided in a track within the planar structure 102, wherein the track may be wide so as to have a low resistance and not significantly affect resistance measurements by the sensors 110.

A line extending from the common contact 130 in Fig. 2 illustrates a track 132 from the common contact 130 to one of the sensors 110. It should be realized that one sensor 110 may be selected to be active such that the electrical connection provided by the individual contact 140 may be used. Thus, the track 132 along which an electrical signal may travel may be dynamically defined based on which individual contact 140 is connected to the source and the detector at a particular point in time.

As illustrated in Fig. 2, the common contact 130 may be arranged at central position in relation to the array of sensors 110. This implies that the track 132 that may be formed in relation to the respective sensors 110 may be relatively short for all of the sensors 110 in the array. Also, differences in lengths of the track 132 for different sensors 110 may be relatively small, such that the resistance measurements by different sensors 110 are not affected to substantially different extents.

As previously shown in Fig. 1, each sensor 110 may have a longitudinal shape. As further illustrated in Fig. 2, the array may comprise a plurality of sub-groups, wherein an orientation of the longitudinal shape of the sensors 110 is different for different sub-groups. The orientation of the longitudinal shape of the sensors 110 may allow relatively wide tracks to be formed centrally within the array, while a distance between neighboring sensors 110 may still be equal within the entire array of sensors 110. This facilitates providing space for the common contact 130 centrally within the array of sensors 110.

In addition, the orientation of the longitudinal shape of the sensors 110 may allow the sensors 110 to be aligned such that a short track 132 may be defined through the array of sensors 110 to the sensors 110 farthest away from the common contact 130.

Fig. 3 shows the electrical connection provided to two sensors 110 in the array. Each sensor 110 has a first contact point 114 connected to one end of the electrically conductive structure 112. These first contact points 114 are connected to the shared common contact 130. In addition, each sensor 110 has a second contact point 118 connected to an individual contact 140.

The common contact 130 may be associated with two leads 134, 136 and the individual contact 140 may also be associated with two leads 142, 144. Two of the leads, for instance leads 134 and 142, may be connected to a source for providing an electrical signal to the electrically conductive structure 112. The two other leads, for instance leads 136 and 144, may be connected to a detector for detecting a resulting electrical signal representing resistance of the electrically conductive structure 112.

As shown in Fig. 3, the sensors 110 share a connection to the common contact 130. When a resistance measurement is performed for the rightmost sensor in Fig. 3, the track 132 passes the leftmost sensor. However, the individual contacts 140 may be selectively connected to the source and the detector, respectively, via switching elements, as will be described below. Hence, when the rightmost sensor 110 is active, the individual contact 140 of the leftmost sensor may be disconnected from the source and the detector, respectively, such that the leftmost sensor will not significantly affect the resistance measurement performed by the rightmost sensor 110.

Referring now to Figs 4a-c, the sensing by the sensor 110 of temperature-induced change in resistance relevant for determining a thermal property of a test subject 10 will be described.

The sensor 110 may be configured to utilize a measurement which is used in transient plane source (TPS) methods for determining thermal properties of a material. The use of a single-sided operation mode of the TPS method may be referred to as the modified transient plane source (MTPS) method.

In a TPS measurement, a constant current pulse is applied to an electrically conductive structure, while a voltage over the structure is measured. Joule heating will cause the temperature of the electrically conductive structure 112 to increase. The electrical resistance of the electrically conductive structure 112 will increase according to:

$$R = R_{ref}[1 + \alpha(T - T_{ref})], \quad (Eq.\,1)$$

where R is electrical resistance of the electrically conductive structure 112, $R_{ref}$ is electrical resistance at reference temperature $T_{ref}$, $T$ is temperature of the electrically conductive structure 112, and $\alpha$ is temperature coefficient of resistance.

The temperature-induced change in electrical resistance is recorded in the voltage measurement. The electrically conductive structure 112 may thus function as both a heater and a temperature sensor, with response to the heating being given by *Eq.* 1 above.

A shape of a temperature response curve based on applying a constant current pulse to the electrically conductive structure 112 depends on the ability of the sensor 110 to exchange heat with its surrounding. Thus, the shape of the temperature response curve depends on thermal effusivity (*e*) of the test subject which the sensor 110 makes contact with. The thermal effusivity of a material is given by:

$$e = \sqrt{\kappa \rho c_p}, \qquad (Eq.\,2)$$

where $\kappa$ is thermal conductivity of the material, $\rho$ is density of the material, and $c_p$ is specific heat capacity of the material.

As illustrated in Fig. 4a, the heat exchange (indicated by arrows) due to Joule heating with a material having low thermal effusivity, such as air, will be relatively small, whereas, as illustrated in Fig. 4b, the heat exchange with a material having high thermal effusivity will be relatively large.

Referring now to Fig. 4c, the temperature response curve for the low thermal effusivity material and the high thermal effusivity material is illustrated (solid lines) plotted against square root of time. In addition, dashed lines indicate a linear regression of the solid lines, ignoring initial non-linear parts. Fig. 4c also indicates the current pulse (dotted line).

As illustrated in Fig. 4c, for the low thermal effusivity material, relatively small heat exchange occurs such that a relatively high increase in the temperature of the electrically conductive structure 112 occurs and a corresponding relatively high increase in the electrical resistance of the electrically conductive structure 112 occurs.

This may be used for determining a desired thermal property of the test subject 10.

After initial non-linear parts, the temperature response curves in Fig. 4c form straight lines. The slope of the linear part of the curve is inversely proportional to the thermal effusivity of the material in contact with the sensor.

In TPS measurements, good thermal contact between the object and the sensor is required. Further, before a current pulse is applied, the temperature of the object should be at equilibrium with the sensor and surroundings. Further, a probing depth of the applied pulse should not exceed physical boundaries of the object such that heat exchange will only take place with the object. This implies that material surrounding the object will not influence the measured slope.

According to an embodiment, the sensor is further configured to acquire a measurement of the resistance for determining a temperature of the test subject.

Thus, in addition to using measurements of the sensor 110 for determining temperature-induced change in resistance indicative of a thermal property, the sensor 110 may further be used for determining the temperature of the test subject.

According to an embodiment, the sensor 110 is configured to acquire the measurement based on the current being induced through the electrically conductive structure 112 being below a self-heating current such that the current being induced is smaller than a threshold for causing heating of the electrically conductive structure 112.

Using a current below the self-heating current may ensure that the measurement of temperature does not induce a change in the temperature of the test subject 10. This ensures that the temperature may be measured accurately. The electrically conductive structure 112 may thus be considered to be in thermal equilibrium with the test subject 10. Hence, the measured resistance $R$ of the electrically conductive structure 112 may be converted to a temperature $T$ of the electrically conductive structure 112 according to *Eq.* 1 above. This temperature further corresponds to the temperature of the test subject 10.

A measurement of the temperature and the thermal property of the test subject 10 may be performed by providing a current pulse which during a first period has a constant value below the self-heating value. During the first period, the resulting voltage is measured and the resistance of the electrically conductive structure 112 is determined using the resulting voltage based on the applied current. Then, during a second period of the current pulse, the applied current may have a value above the self-heating current so as to cause Joule heating for determining the temperature-induced change in resistance. The resulting voltage may then be processed as discussed above in relation to Fig. 4c in order to determine the thermal property of the test subject 10.

However, it should be realized that the current induced through the electrically conductive structure 112 need not necessarily be below the self-heating current for determining the temperature of the test subject. Rather, a current above the self-heating current may be used, which may cause a (slight) change of the temperature of the test subject such that a small offset of the absolute temperature of the test subject is caused, and that the absolute temperature may not be entirely correctly determined. This may still be acceptable when it is desired to identify a change in temperature rather than to determine an exact absolute temperature of the test subject.

According to an embodiment, the device 100 is configured to be used with a microplate. The device 100 may thus be provided as a microplate reader for performing measurements on samples, such as cell samples, provided in microwells of the microplate.

The microplate may typically be provided with a large number of microwells in order to allow several cell samples provided in different microwells to be monitored simultaneously. The array of sensors 110 of the device 100 may thus be integrated with the microplate for allowing measurements to be performed on the cell samples. Each sensor 110 in the array may be associated with a respective microwell.

Thanks to the limited number of contacts that are needed to be provided in relation to each of the sensors 110, the sensors 110 may be arranged close to each other, allowing sensors 110 to be provided with a distance between neighboring sensors 110 corresponding to a distance between neighboring microwells.

The sensing of resistance and temperature-induced change of resistance provided by the array of sensors 110 may be beneficially used for monitoring the cell samples. The resistance being indicative of temperature of the cell sample may provide information relating to metabolic activity in the cell sample. Further, the temperature-induced change in resistance is indicative of a thermal property of the cell sample. The thermal conductivity $\kappa$ of the individual cells may be lower than the thermal conductivity of a liquid culture medium. Therefore, during cell proliferation, the number of cells at an interface to the sensor 110, a layer of cells may increasingly act as a thermal barrier between the sensor 110 and the liquid culture medium. Hence, the thermal property indicated by the temperature-induced change in resistance may provide an indication of cell proliferation or of cell count in the cell sample.

According to another embodiment, the device 100 is configured to sense the resistance and the temperature-induced change in resistance for each sensor 110, wherein the resistance is indicative of temperature of a liquid sample representing thermal properties of the liquid sample, and wherein the temperature-induced change in resistance is indicative of thermal properties representing mixing ratios of different liquids.

Each sensor 110 may be associated with a separate liquid sample. Alternatively, the sensors 110 may be associated with different parts or regions of the same liquid sample. Different liquids may have different thermal properties, such as different thermal conductivity. Hence, by measuring the temperature-induced change in resistance, a mixing ratio of liquids may be determined.

According to another embodiment, the device 100 is configured to sense the resistance and temperature-induced change in resistance for each sensor 110, providing multi-point measurement for detecting and differentiation of objects.

Thus, the device 100 may provide a spatial resolution of detecting temperature and thermal properties of an object. The array of sensors 110 may form a device 100 that may provide synthetic skin. The array of sensors 110 may then allow differentiation of objects based on varying resistance levels, similar to how natural skin detects objects through touch.

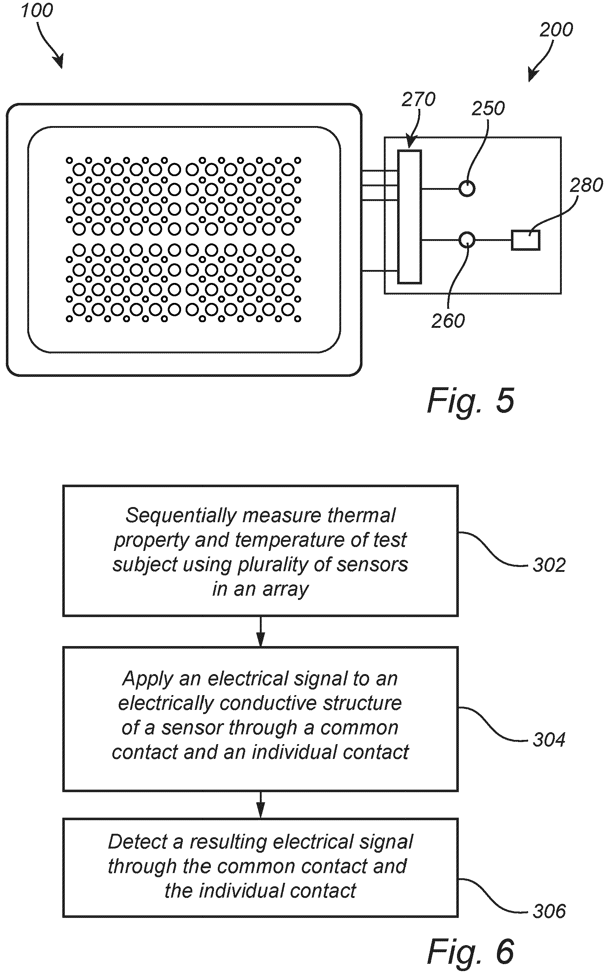

Referring now to Fig. 5, a system 200 for measuring thermal property and temperature of the test subject 10 will be described.

The system 200 comprises the device 100 according to any of the embodiments described above.

The system 200 further comprises a source 250 configured to provide an electrical signal to be applied to the electrically conductive structure 112 of each sensor 110 in the array. The system 200 also comprises a detector 260 configured to detect a resulting electrical signal from each sensor 110.

The system 200 may comprise a single source 250 and a single detector 260. This implies that the source 250 and the detector 260 may be shared by all of the sensors 110 in the array, such that hardware of the system 200 is limited.

The system 200 further comprises a connecting network 270. The connecting network 270 may be provided between the source 250 and the second contact point 118 of each of the sensors 110 and between the detector 260 and the second contact point 118 of each of the sensors 110.

The source 250 and the detector 260 may be connected to the device 100 using cables being connected to the contact pads of the device 100. Each contact pad, i.e., the common contact 130 and each individual contact 140, may be provided with an interface for allowing a cable connected to the source 250 and the detector 260 to be connected to the contact pad.

The device 100 comprises a limited number of contacts, for instance one individual contact 140 per sensor 110 together with a single common contact 130 shared by all the sensors 110. This allows the sensors 110 to be arranged in close vicinity to each other, allowing a small pitch between sensors 110.

The connecting network 270 may comprise a plurality of connector units. Each connector unit is configured to provide a connection to one contact of the device 100. The connector unit may for instance comprise an interface end of a cable for being connected to a contact pad of the device 100. The cable may further comprise two leads, each associated with the source 250 and the detector 260, respectively. Thus, the single connector unit may provide a connection between the device 100 and both of the source 250 and the detector 260, such that the source 250 and the detector 260 are separately connected to the contact of the device 100.

The source 250 and the detector 260 may be connected to the common contact 130 via leads 134, 136 of a connector unit. This connection may be statically provided.

The connecting network 270 is configured to selectively connect the source 250 and the detector 260 to the sensors 110. Thus, the connecting network 270 may be configured to dynamically control which leads (and hence which sensor 110) that are to be connected to the source 250 and the detector 260 at a given point in time. Thus, the connecting network 270 may comprise a plurality of switching elements. The switching elements may be controlled for controlling which individual contact 140 that is connected to the source 250 and the detector 260.

The connecting network 270 may comprise a number of switching elements corresponding to the number of leads associated with the individual contacts 140 of the sensors 110 in the array. Thus, the connecting network 270 may comprise two switching elements per sensor 110.

The connecting network 270 may be configured to select one sensor 110 to be active at a time. Thus, the switching elements associated with the selected sensor 110 which is to be used for performing a measurement may be set to connect the selected sensor 110 to the source 250 and the detector 260, while all other switching elements may be set to disconnect the other sensors from the source 250 and the detector 260.

The connecting network 270 may be configured to sequentially connect the sensors 110 to the source 250 and the detector 260 in a time-multiplexed manner for sequentially performing measurements by the sensors 110 in the array.

The source 250 may be a current source for applying a current through the electrically conductive structure 112 of the selected sensor 110. The detector 260 may be a voltage detector for detecting a resulting voltage across the electrically conductive structure 112. However, it should be realized that the source 250 may alternatively be a voltage source for providing a voltage across the electrically conductive structure 112. The detector 260 may then be a current detector for detecting a resulting current through the electrically conductive structure 112.

The system 200 may further comprise a processing unit 280. The processing unit 280 may be configured to receive data from the detector 260. The data may represent the resistance and the temperature-induced change in resistance of the electrically conductive structure 112 of the sensor 110 for which a measurement is performed. The processing unit 280 may be configured to process the data for determining the temperature and the thermal property of the test subject, as discussed above.

The processing unit 280 may be implemented as a general-purpose processing unit, such as a central processing unit (CPU), which may execute instructions of one or more computer programs in order to implement appropriate functionality. However, the processing unit 280 may alternatively be implemented as firmware arranged, e.g., in an embedded system, or as a specifically designed processing unit 280, such as an Application-Specific Integrated Circuit (ASIC) or a Field-Programmable Gate Array (FPGA).

The source 250, the detector 260 and the processing unit 280 may be arranged in a common housing for providing a compact system. However, it should be realized that the source 250, the detector 260 and the processing unit 280 may be arranged in different housings. For instance, the processing unit 280 may be arranged in any remote location. Thus, the processing unit 280 may be arranged in a separate housing and may be configured to communicate with the detector 260 through wired or wireless communication. For instance, the processing unit 280 may be arranged in a separate housing which is configured to be arranged in vicinity to the detector 260. However, the processing unit may be arranged anywhere, such as in a server "in the cloud".

Referring now to Fig. 6, a method for measuring thermal property and temperature of a test subject will be described.

The method comprises sequentially measuring 302 thermal property and temperature of the test subject using a plurality of sensors in an array. The method may comprise controlling switching elements for connecting a common source and a common detector to the individual contact of the sensor to be used in measurement. Thus, a single sensor may be connected to the source and the detector at a given point in time and the switching elements may be controlled for providing a time-multiplexed scheme for sequentially connecting the sensors to the source and the detector for performing sequential measurements.

The measuring of the thermal property and the temperature of the test subject performed by a sensor comprises applying 304 an electrical signal to an electrically conductive structure of the sensor between a first contact point and a second contact point of the sensor. The electrical signal is applied through a common contact, configured to provide a common electrical connection to the first contact point of each of the sensors in the array, and an individual contact configured to provide an individual electrical connection to the second contact point of the sensor. The individual contact of the sensor for which a measurement is performed is selectively connected to the source when the measurement is performed. In addition, the common contact may be statically connected to the source. Thus, the source is connected for applying the electrical signal to the electrically conductive structure of the selected sensor.

The method further comprises detecting 306 a resulting electrical signal between the first contact point and the second contact point for detecting a measurement of a resistance indicative of temperature of the test subject and detecting a measurement of a temperature-induced change in resistance indicative of thermal property of the test subject. The resulting electrical signal is detected through a common contact, configured to provide a common electrical connection to the first contact point of each of the sensors in the array, and an individual contact configured to provide an individual electrical connection to the second contact point of the sensor. The individual contact of the sensor for which a measurement is performed is selectively connected to the detector when the measurement is performed. In addition, the common contact may be statically connected to the detector. Thus, the detector is connected for detecting the resulting electrical signal of the electrically conductive structure of the selected sensor.

The resulting electrical signal may further be processed by a processing unit for determining a temperature of the test subject and a thermal property of the test subject.

In the above the inventive concept has mainly been described with reference to a limited number of examples. However, as is readily appreciated by a person skilled in the art, other examples than the ones disclosed above are equally possible within the scope of the inventive concept, as defined by the appended claims.

**Claims**

1. A device (100) for sensing thermal property and temperature of a test subject, said device (100) comprising:

   an array of sensors (110); wherein each sensor (110) comprises an electrically conductive structure (112), wherein the sensor (110) is configured for applying an electrical signal to the electrically conductive structure (112) and sensing a resistance and a temperature-induced change in resistance of the electrically conductive structure (112), wherein the resistance is indicative of temperature of the test subject and wherein the temperature-induced change in resistance is indicative of thermal property of the test subject, wherein each sensor (110) comprises at least one first contact point (114) and at least one second contact point (118), wherein the electrically conductive structure (112) is electrically connected between the at least one first contact point (114) and the at least one second contact point (118), wherein the sensor (110) is configured to apply the electrical signal between the at least one first contact point (114) and the at least one second contact point (118) and sense the resistance and the temperature-induced change in resistance between the at least one first contact point (114) and the at least one second contact point (118);
   a common contact (130), wherein the common contact (130) is configured to provide a common electrical connection to the at least one first contact point (114) of each of the sensors (110) in the array; and
wherein each of the sensors (110) comprises an individual contact (140) configured to provide an individual electrical connection to the at least one second contact point (118) of the sensor (110).

2. The device according to claim 1, wherein each sensor (110) comprises a single first contact point (114) and a single second contact point (118).

3. The device according to claim 1 or 2, wherein the device (100) comprises a planar structure (102), wherein the planar structure (102) is formed by an electrically conductive material and is configured to extend across an area encompassing all of the sensors (110) in the array, wherein the at least one first contact point (114) of each of the sensors (110) is connected to the common contact (130) via the planar structure (102).

4. The device according to any one of the preceding claims, wherein the common contact (130) is arranged at a central position in relation to the array of sensors (110).

5. The device according to any one of the preceding claims, wherein each sensor (110) has a longitudinal shape and wherein the array comprises a plurality of sub-groups, wherein an orientation of the longitudinal shape of the sensors (110) is different for different sub-groups.

6. The device according to any one of the preceding claims, wherein the device (100) is configured to form part of a microplate comprising a plurality of microwells, such as 24, 48, 96, 192, 384, 768, or 1536 microwells, wherein each microwell is configured to hold a sample, such as a cell sample, forming part of the test subject and wherein each of the sensors (110) in the array is associated with a respective microwell.

7. The device according to claim 6, wherein the device (100) is configured to sense the resistance and the temperature-induced change in resistance for each sensor (110), wherein the resistance is indicative of temperature of the cell sample representing metabolic activity and wherein the temperature-induced change in resistance is indicative of thermal property of the cell sample representing cell proliferation.

8. The device according to claim 6, wherein the device (100) is configured to sense the resistance and the temperature-induced change in resistance for each sensor (110), wherein the resistance is indicative of temperature of a liquid sample representing thermal properties of the liquid sample, and wherein the temperature-induced change in resistance is indicative of thermal properties representing mixing ratios of different liquids.

9. The device according to any one of claims 1-5, wherein the device (100) is configured to sense the resistance and temperature-induced change in resistance for each sensor (110), providing multi-point measurement for detecting and differentiation of objects.

10. A system (200) for measuring thermal property and temperature of a test subject, the system (200) comprising:

the device (100) according to any one of the preceding claims;
a source (250) configured to provide an electrical signal to be applied to the electrically conductive structure (112) of each sensor (110);
a detector (260) configured to detect a resulting electrical signal between the at least one first contact point (114) and the at least one second contact point (118) for detecting a measurement of the resistance and a measurement of the temperature-induced change in resistance; and
a connecting network (270) for connecting the source (250) and the detector (260), respectively, to the common contact (130) and to each individual contact (140) of the sensors (110).

11. The system according to claim 10, wherein the connecting network (270) is configured to provide a plurality of connector units, wherein a single connector unit is associated with each of the common contact (130) and the individual contacts (140) of the sensors (110), and wherein each connector unit comprises two leads for connecting to the source (250) and the detector (260), respectively.

12. The system according to claim 10 or 11, wherein the connecting network (270) comprises a plurality of switching elements for controlling measurement of thermal property and temperature by one sensor (110) at a time.

13. The system according to any one of claims 10-12, further comprising a processing unit (280), wherein the processing unit (280) is configured to receive data from the detector (260) representing the resistance and the temperature-induced change in resistance detected by the detector (260), wherein the processing unit (280) is configured to process the data for determining the thermal property and temperature of the test subject.

14. A method for measuring thermal property and temperature of a test subject, said method comprising:
sequentially measuring (302) thermal property and temperature of the test subject using a plurality of sensors in an array, wherein, for each sensor in the plurality of sensors, measuring of the thermal property and the temperature of the test subject comprises:

applying (304) an electrical signal to an electrically conductive structure of the sensor between at least one first contact point and at least one second contact point of the sensor, wherein the electrical signal is applied through a common contact, configured to provide a common electrical connection to the at least one first contact point of each of the sensors in the array and an individual contact configured to provide an individual electrical connection to the at least one second contact point of the sensor;
detecting (306) a resulting electrical signal between the at least one first contact point and the at least one second contact point for detecting a measurement of a resistance indicative of temperature of the test subject and detecting a measurement of a temperature-induced change in resistance indicative of thermal property of the test subject.

15. The method according to claim 14, wherein said sequentially measuring comprises controlling switching elements for connecting a common current source and a common voltage detector to the individual contact of the sensor to be used in measurement.

Fig. 1

Fig. 2

*Fig. 3*

*Fig. 4a*

*Fig. 4b*

*Fig. 4c*

100

200

270

250

280

260

## Fig. 5

Sequentially measure thermal
property and temperature of test
subject using plurality of sensors
in an array
— 302

Apply an electrical signal to an
electrically conductive structure
of a sensor through a common
contact and an individual contact
— 304

Detect a resulting electrical signal
through the common contact and
the individual contact
— 306

## Fig. 6

Europäisches
Patentamt

European
Patent Office

Office européen
des brevets

# EUROPEAN SEARCH REPORT

**Application Number**

EP 24 20 0991

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/007665 A1 (BRITTON DAVID THOMAS [ZA] ET AL) 8 January 2015 (2015-01-08) | 1-5,9-15 | INV. G01K1/02 |
| Y | * paragraph [0037] - paragraph [0052]; figures 1-5 * | 1-15 | ADD. G01K7/16 |
| | ----- | | |
| X | KR 100 464 133 B1 (DAEYANG INSTR CO LTD) 3 January 2005 (2005-01-03) | 1-5,9-15 | |
| Y | * paragraph [0037] - paragraph [0047]; figure 4 * | 1-15 | |
| | ----- | | |
| X | WO 2006/053386 A1 (RHEEM AUSTRALIA PTY LTD [AU]; ECHTNER GEORGE [AU] ET AL.) 26 May 2006 (2006-05-26) | 1-5,9-15 | |
| Y | * paragraph [0059] - paragraph [0102]; figures 1-10 * | 1-15 | |
| | ----- | | |
| Y | Oudebrouckx Gilles ET AL: "Integrating Thermal Sensors in a Microplate Format: Simultaneous Real-Time Quantification of Cell Number and Metabolic Activity", ACS Applied Materials & Interfaces, Volume 14, Issue 2, 6 January 2022 (2022-01-06), pages 2440-2451, XP093250122, Washington, D.C., USA. DOI: https://doi.org/10.1021/acsami.1c14668 Retrieved from the Internet: URL:https://pubs.acs.org/doi/10.1021/acsami.1c14668# [retrieved on 2025-02-14] * the whole document * | 1-15 | **TECHNICAL FIELDS SEARCHED (IPC)** G01K |
| | ----- | | |
| | -/-- | | |

The present search report has been drawn up for all claims

| Place of search | Date of completion of the search | Examiner |
|---|---|---|
| The Hague | 17 February 2025 | Rosello Garcia, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt
European Patent Office
Office européen des brevets

**EUROPEAN SEARCH REPORT**

Application Number

EP 24 20 0991

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GUSTAFSSON S E: "TRANSIENT PLANE SOURCE TECHNIQUES FOR THERMAL CONDUCTIVITY AND THERMAL DIFFUSIVITY MEASUREMENTS OF SOLID MATERIALS", REVIEW OF SCIENTIFIC INSTRUMENTS, AMERICAN INSTITUTE OF PHYSICS, 2 HUNTINGTON QUADRANGLE, MELVILLE, NY 11747, vol. 62, no. 3, 1 March 1991 (1991-03-01), pages 797-804, XP000224328, ISSN: 0034-6748, DOI: 10.1063/1.1142087 * the whole document * ----- | 1-15 | |
| A | SE 516 026 C2 (HOT DISK AB [SE]) 12 November 2001 (2001-11-12) * the whole document * ----- | 1-15 | |

TECHNICAL FIELDS SEARCHED (IPC)

The present search report has been drawn up for all claims

| Place of search | Date of completion of the search | Examiner |
|---|---|---|
| The Hague | 17 February 2025 | Rosello Garcia, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................
& : member of the same patent family, corresponding document

EPO FORM 1503 03.82 (P04C01)

# ANNEX TO THE EUROPEAN SEARCH REPORT
## ON EUROPEAN PATENT APPLICATION NO.

EP 24 20 0991

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2025

| Patent document cited in search report | | Publication date | Patent family member(s) | | Publication date |
|---|---|---|---|---|---|
| US 2015007665 | A1 | 08-01-2015 | CN | 104185780 A | 03-12-2014 |
| | | | EP | 2810037 A1 | 10-12-2014 |
| | | | JP | 2015513068 A | 30-04-2015 |
| | | | KR | 20140111714 A | 19-09-2014 |
| | | | US | 2015007665 A1 | 08-01-2015 |
| | | | WO | 2013114291 A1 | 08-08-2013 |
| | | | ZA | 201406077 B | 25-11-2015 |
| KR 100464133 | B1 | 03-01-2005 | NONE | | |
| WO 2006053386 | A1 | 26-05-2006 | NONE | | |
| SE 516026 | C2 | 12-11-2001 | AU | 4962600 A | 05-12-2000 |
| | | | WO | 0070333 A1 | 23-11-2000 |

EPO FORM P0459

For more details about this annex : see Official Journal of the European Patent Office, No. 12/82